# EUROPEAN PATENT APPLICATION

(11) **EP 2 779 529 A1**
(43) Date of publication of application: **17.09.2014**
(21) Application number: 12857065.2
(22) Date of filing: 08.12.2012
(51) Int. Cl.: H04L 12/24

(54) **METHOD AND DEVICE FOR CONTROLLING RESOURCES**

(30) Priority: 14.12.2011 CN 201110418130
(71) Applicant: Huawei Technologies Co., Ltd, Shenzhen, Guangdong 518129 (CN)
(72) Inventor: CHEN, Xiaohui, Shenzhen Guangdong 518129 (CN); WEI, Hanyu, Shenzhen Guangdong 518129 (CN); WANG, Ruifeng, Shenzhen Guangdong 518129 (CN)
(74) Representative: Goddar, Heinz J.
(86) International application number: PCT/CN2012/086233
(87) International publication number: WO 2013/086952

(57) **Abstract**

Embodiments of the present invention disclose a resource control method and apparatus. A client sends an authorization request message to a content provider. The content provider sends an authorization response message to the client according to a user identifier carried in the authorization request message, where the authorization response message carries an authorized access token. The client sends a content request message to a storage server corresponding to the content provider, where the content request message carries an identifier of content requested by the client and the authorized access token. The client receives the content sent by the storage server according to the authorized access token. The present invention is applied to the field of network resource management.

## Description

This application claims priority to Chinese Patent Application No. CN 201110418130.3 filed with the Chinese Patent Office on December 14, 2011 and entitled "RESOURCE CONTROL METHOD AND APPARATUS", which is incorporated herein by reference in its entirety.

### TECHNICAL FIELD

The present invention relates to the field of network resource management, and in particular, **to** a resource control method and apparatus.

### BACKGROUND

OAuth (a third-party authorization protocol) is an open standard, which enables a user to allow a third-party application to access a private resource (for example, a photo, a video, a contact list) stored by the user on a website, without the need to provide a user name and a password for the third-party application. OAuth allows the user to provide a token, instead of the user name and password, to access data stored by the user at a specific service provider. Each token authorizes a specific website to access a specific resource within a specific period of time. In this way, OAuth allows users to authorize a third party to access information that they have stored at another service provider, without sharing with the third party their access keys or all the content of their data.

In the prior art, a client obtains a resource storage location by accessing an application server (might be a website) corresponding to a content provider, and with the content provider's authorization, the client can directly access a storage server to obtain a resource. In this technical solution, the storage server, as a resource storage terminal, is unaware of a type of service at the client, but only provides a content source. Therefore, in the prior art, though the storage server may provide content for the client according to authorization provided by a resource provider to the client, the storage server cannot provide content for users at different levels (a priority level, the number of connections available, and the like) by using different resources, causing resources to be uncontrollable during storage and distribution of the content.

### SUMMARY

Embodiments of the present invention provide a resource control method and apparatus, to resolve a problem that a storage server cannot provide content for users at different levels (a priority level, the number of connections available, and the like) by using different resources.

According to one aspect, an embodiment of the present invention provides a resource control method, including:
sending, by a client, an authorization request message to a content provider, where the authorization request message carries a user identifier and an unauthorized access token;
receiving, by the client, an authorization response message sent by the content provider according to the authorization request message, where the authorization response message carries authorization information, and the authorization information includes an authorized access token;
sending, by the client, a content request message to a storage server corresponding to the content provider, where the content request message carries an identifier of content requested by the client and the authorized access token; and
receiving, by the client, content sent by the storage server according to the authorized access token.

According to another aspect, an embodiment of the present invention provides a resource control apparatus, including:
a first sender, configured to send an authorization request message to a content provider, where the authorization request message carries a user identifier and an unauthorized access token;
a first receiver, configured to receive an authorization response message sent by the content provider according to the authorization request message, where the authorization response message carries authorization information, and the authorization information includes an authorized access token;
a second sender, configured to send a content request message to a storage server corresponding to the content provider, where the content request message carries an identifier of content requested by the client and the authorized access token; and
a second receiver, configured to receive the content sent by the storage server according to the authorized access token.

According to still another aspect, an embodiment of the present invention provides a resource control method, including:
receiving, by a storage server, a content request message sent by a client, where the content request message carries an identifier of content requested by the client and an authorized access token;
allocating, by the storage server, a resource for the client according to the authorized access token; and
sending, by the storage server, the content requested by the client to the client by using the resource allocated to the client. According to a fourth aspect, an embodiment of the present invention provides a resource control apparatus, including:
   a first receiver, configured to receive a content request message sent by a client, where the content request message carries an identifier of content requested by the client and an authorized access token;
   an allocating unit, configured to allocate a resource to the client according to the authorized access token; and
   a first sender, configured to send to the client the content requested by the client by using the resource allocated by the allocating unit to the client. In the embodiments of the present invention, a client sends an authorization request message to a content provider. The content provider sends an authorization response message to the client according to a user identifier carried by the authorization request message, where the authorization response message carries an authorized access token. The client receives content sent by a storage server corresponding to the content provider, by using a resource allocated by the storage server according to the authorized access token. The resource control method and apparatus provided in the embodiments of the present invention implement that a storage server, corresponding to a content provider, provides content for users at different levels (a priority level, the number of connections available, and the like), by using different resources, when the content provider authorizes a client.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a resource control method according to an embodiment of the present invention;
FIG. 2 is a schematic structural diagram of a resource control apparatus according to an embodiment of the present invention;
FIG. 3 is a schematic flowchart of another resource control method according to an embodiment of the present invention; and
FIG. 4 is a schematic structural diagram of another resource control apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

To make the advantages of the technical solutions of the present invention more clear, the following describes in detail the present invention with reference to the accompanying drawings and embodiments.

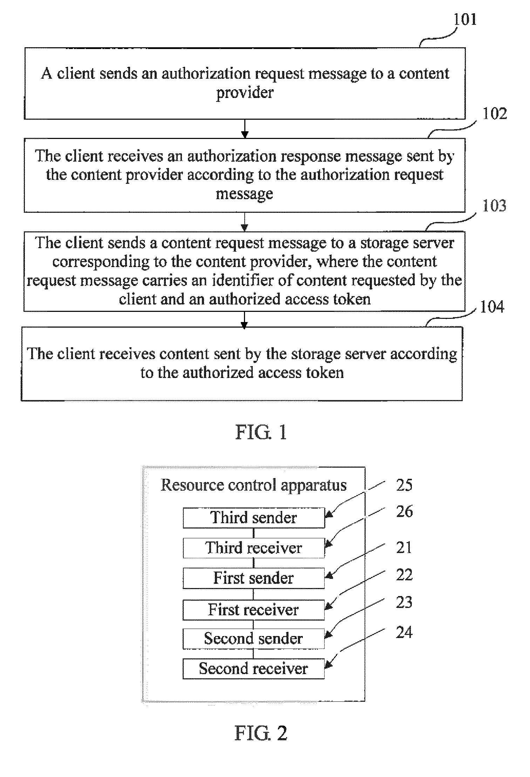

FIG 1 illustrates a resource control method according to an embodiment of the present invention, where the method includes the following steps:
101: A client sends an authorization request message to a content provider.

The authorization request message carries a user identifier oauth_consumer_key (used to uniquely identify a user application program) and an unauthorized access token oauth_token (used to obtain an authorized access token from the content provider).

Optionally, the authorization request message may further include: a request string signature method oauth_signature_method (used to specify an encryption and coding method for the request string), a request signature oauth_signature by using the signature method (a request string that has been encrypted and coded by using the foregoing signature method), a request initiating timestamp oauth_timestamp (used to identify a time point at which the request is initiated, for example, the number of seconds is 00:00:00 from the present time to 1970), and a random string oauth_nonce to prevent resending request and illegal attack.

Optionally, before step 101, the method further includes:

The client sends a pre-request message to the content provider, where the pre-request message carries an identifier of content requested by the client. After receiving the pre-request message, the content provider sends a pre-response message to the client, where the pre-response message carries an address of a storage server in which the content is stored.

The client sends an access token request message to the storage server, and receives an unauthorized access token sent by the storage server according to the access token request message. Optionally, the access token request message carries one or more of the following parameters: a user identifier oauth_consumer_key, a user encryption method oauth_consumer_secret (a key corresponding to the oauth_consumer_key), the request string signature method oauth_signature_method, the request signature oauth_signature by using the signature method, the request initiating timestamp oauth_timestamp, and the random string oauth_nonce to prevent resending request and illegal attack.

102: The client receives an authorization response message sent by the content provider according to the authorization request message, where the authorization response message carries authorization information.

The authorization information includes an authorized access token oaufh_token.

Optionally, the authorization information further includes a user encryption method oauth_token_secret corresponding to the authorized access token, where the authorized access token includes at least one of the following: a priority level of the client, available bandwidth and the number of connections of the client, the number of accessible storage resources of the client, and a validity period of authorization of the client.

103: The client sends a content request message to a storage server corresponding to the content provider, where the content request message carries an identifier of content requested by the client and an authorized access token.

104: The client receives content sent by the storage server according to the authorized access token.

Specifically, the client receives the content requested by the client and sent by the storage server according to a resource allocated by the storage server according to the authorized access token.

For example, a resource download website serves as the content provider, and the website uploads a resource to be distributed. The website first uploads the content onto the storage server and possesses control permission on all the content it has uploaded. When the client of the website needs to access shared content published on the website, the client first accesses a web page of the website (that is, sending a pre-request message) to obtain a download address of the content (that is, receiving a pre-response message). The download address may be a URL, an IP, or the like. The client then applies to the storage server to which the download address corresponds for an unauthorized access token (that is, sending an access token request message). After obtaining the unauthorized access token, the client then applies, for authentication, to the website by using the access token (that is, sending an authorization request message). The website identifies a level of the client according to the client's identifier ID, and determines whether to grant the client access permission. If the access permission can be granted, the client is then granted, according to the level of the client, the authorized access token that includes such access capabilities as a priority level, available bandwidth, the number of available connections, a size of an accessible storage resource, and a validity period of authorization (that is, sending an authorization response message). After the authorization is completed, the client can request content from the storage server corresponding to the authorized access token (that is, sending a content request message). After receiving the content request from the client, the storage server determines a resource (including the bandwidth, the number of connections, and the like) to be allocated to the client, according to at least one of the following pieces of information: the priority level, the available bandwidth, the number of available connections, the size of the accessible storage resource, and the validity period of authorization, which are included in the authorized access token of the client. The storage server, by using the resource allocated to the client, sends to the client the content requested by the client.

FIG 2 illustrates a resource control apparatus according to an embodiment of the present invention. The apparatus is configured to implement the method shown in FIG. 1. The apparatus includes: a first sender 21, a first receiver 22, a second sender 23, and a second receiver 24. Optionally, the apparatus further includes a third sender 25 and a third receiver 26.

The first sender 21 is configured to send an authorization request message to a content provider.

The authorization request message carries a user identifier oauth_consumer_key and an unauthorized access token oauth_token. The authorization request message may further carry a request string signature method oauth_signature_method, a request signature oauth_signature by using the signature method, a request initiating timestamp oauth_timestamp, and a random string oauth_nonce to prevent resending request and illegal attack. Functions of the parameters carried by the authorization request message are the same as the functions described in FIG. 1, and no details are described herein again.

The first receiver 22 is configured to receive an authorization response message sent by the content provider according to the authorization request message.

The authorization response message carries authorization information, where the authorization information includes an authorized access token oauth_token.

Optionally, the authorization information further includes an encryption method oauth_token_secret corresponding to the authorized access token, where the authorized access token includes at least one of the following: a priority level of the client, available bandwidth and the number of connections of the client, the number of accessible storage resources of the client, and a validity period of authorization of the client.

The second sender 23 is configured to send a content request message to a storage server corresponding to the content provider, where the content request message carries an identifier of requested content and the authorized access token.

The second receiver 24 is configured to receive the content sent by the storage server according to the authorized access token.

The second receiver 24 is specifically configured to receive the content requested by the client and sent by the storage server by using a resource allocated according to the authorized access token.

The third sender 25 is configured to send an access token request message to the storage server.

The access token request message carries one or more of the following parameters: the user identifier oauth_consumer_key, a user encryption method oauth_consumer_secret (a key corresponding to the oauth_consumer_key), the request string signature method oauth_signature_method, a request signature oauth_signature by using the signature method, the request initiating timestamp oauth_timestamp, and the random string oauth_nonce to prevent resending request and illegal attack. Functions of the parameters carried by the access token request message are the same as the functions described in FIG 1, and no details are described herein again.

The third receiver 26 is configured to receive the unauthorized access token sent by the storage server according to the access token request message.

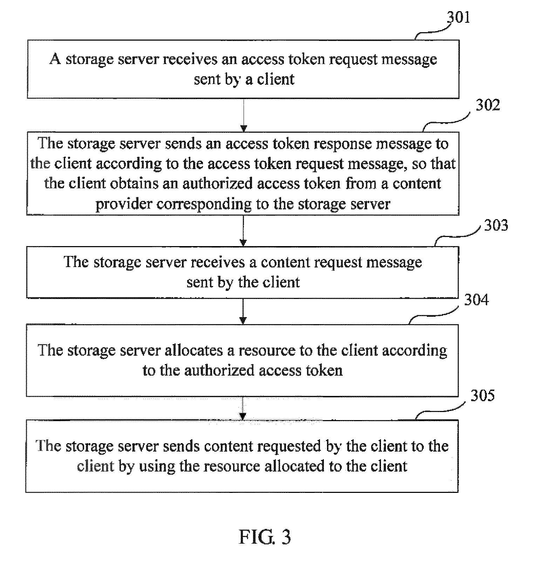

FIG. 3 illustrates another resource control method according to an embodiment of the present invention, where the method includes the following steps:

301: A storage server receives an access token request message sent by a client.

The access token request carries a user identifier oauth_consumer_key (used to uniquely identify a user application program).

Optionally, the access token request message may further include one or more of the following: a request string signature method oauth_signature_method (used to specify an encryption and coding method for the request string), a request signature oauth_signature by using the signature method (a request string that has been encrypted and coded by using the foregoing signature method), a request initiating timestamp oauth_timestamp (used to identify a time point at which the request is initiated, for example, the number of seconds is 00:00:00 from the present time to 1970), and a random string oauth_nonce to prevent resending request and illegal attack.

302: The storage server sends an access token response message to the client according to the access token request message, so that the client obtains an authorized access token from a content provider corresponding to the storage server.

The access token response message carries authorization information, where the authorization information includes an unauthorized access token.

303: The storage server receives a content request message sent by the client

The content request message carries an identifier of content requested by the client and the authorized access token.

Optionally, the content request message may further include one or more of the following: an encryption method for the authorized access token, the request string signature method oauth_signature_method (used to specify the encryption and coding method for the request string), the request signature oauth_signature by using the signature method (the request string that has been encrypted and coded by using the foregoing signature method), the request initiating timestamp oauth_timestamp (used to identify the time point at which the request is initiated, for example, the number of seconds is 00:00:00 from the present time to 1970), the random string oauth _nonce to prevent resending request and illegal attack.

304: The storage server allocates a resource to the client according to the authorized access token.

Specifically, after receiving the content request message, the storage server allocates the resource to the client according to the authorized access token carried in the content request message, where the resource may be a bandwidth and/or the number of connections available for the client and a time for occupying the bandwidth and/or the number of connections.

305: The storage server sends the content requested by the client to the client by using the resource allocated to the client.

For example, a resource download website serves as the content provider, and the website uploads a resource to be distributed. The website first uploads the content onto the storage server and possesses control permission on all the content it has uploaded. When the client of the website needs to access shared content published on the website, the client first accesses a web page of the website to obtain a download address of the content (may be a URL, an IP or the like), and then applies to the storage server to which the download address corresponds for an unauthorized access token. After obtaining the unauthorized access token, the client then applies, for authentication, to the website by using the access token. The website identifies a level of the client according to the client's identifier ID, and determines whether to grant the client access permission. If the access permission can be granted, the client is then granted, according to the level of the client, the authorized access token that includes such access capabilities as a priority level, available bandwidth, the number of available connections, a size of an accessible storage resource, and a validity period of authorization. After the authorization is completed, the client can request content from the storage server corresponding to the authorized access token. After receiving the content request from the client, the storage server determines a resource (including the bandwidth, the number of connections, and the like) to be allocated to the client, according to at least one of the following pieces of information: the priority level, the available bandwidth, the number of available connections, the size of the accessible storage resource, and the validity period of authorization, which are included in the authorized access token of the client. The storage server, by using the resource allocated to the client, sends to the client the content requested by the client.,

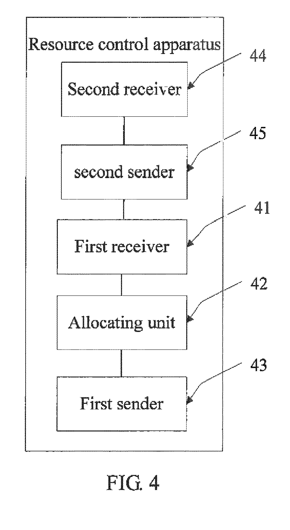

FIG 4 illustrates another resource control apparatus according to an embodiment of the present invention. The apparatus includes: a first receiver 41, an allocating unit 42, and a first sender 43. Optionally, the apparatus further includes a second receiver 44 and a second sender 45.

The first receiver 41 is configured to receive a content request message sent by a client, where the content request message carries an identifier of content requested by the client and an authorized access token.

Optionally, the content request message may further include one or more of the following: an encryption method of the authorized access token, a request string signature method oauth_signature_method (used to specify an encryption and coding method for a request string), a request signature oauth_signature by using the signature method (a request string that has been encrypted and coded by using the foregoing signature method), a request initiating timestamp oauth_timestamp (used to identify a time point at which the request is initiated, for example, the number of seconds is 00:00:00 from the present time to 1970), and a random string oauth_nonce to prevent resending request and illegal attack.

The allocating unit 42 is configured to allocate a resource to the client according to the authorized access token.

The first sender 43 is configured to send to the client the content requested by the client by using the resource allocated by the allocating unit to the client.

The second receiver 44 is configured to receive an access token request message sent by the client.

The access token request message carries a user identifier oauth_consumer_key (used to uniquely identify a user application program).

Optionally, the access token request message may further include: the request string signature method oauth_signature_method (used to specify the encryption and coding method for the request string), the request signature oauth_signature by using the signature method (the request string that has been encrypted and coded by using the foregoing signature method), the request initiating timestamp oauth_timestamp (used to identify the time point at which the request is initiated, for example, the number of seconds is 00:00:00 from the present time to 1970), the random string oauth_nonce to prevent resending request and illegal attack.

The second sender 45 is configured to send an access token response message to the client according to the access token request message, so that the client obtains an authorized access token from a content provider corresponding to the storage server.

The resource control method and apparatus provided in the embodiments of the present invention implement that a content provider, when authorizing a client, may adjust authorization for different clients according to an identifier of the client. Therefore, a resource is controllable when the resource is stored and distributed on a network.

The resource control apparatus provided in the embodiments of the present invention can implement the foregoing method embodiments. For implementation of a specific function, refer to the descriptions of the method embodiments, and no details are described herein again. The resource control method and apparatus provided in the embodiments of the present invention are applied to network resource management, but the embodiments of the present invention are not limited thereto.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may include: a magnetic disk, an optical disc, a read-only memory (Read-Only Memory, ROM), or a random access memory (Random Access Memory, RAM).

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A resource control method, comprising:
sending, by a client, an authorization request message to a content provider, wherein the authorization request message carries a user identifier and an unauthorized access token;
receiving, by the client, an authorization response message sent by the content provider according to the authorization request message, wherein the authorization response message carries authorization information, and the authorization information comprises an authorized access token;
sending, by the client, a content request message to a storage server corresponding to the content provider, wherein the content request message carries an identifier of content requested by the client and the authorized access token; and
receiving, by the client, content sent by the storage server according to the authorized access token.

2. The resource control method according to claim 1, wherein the authorized access token comprises at least one of the following: a priority level of the client, available bandwidth and the number of resource connections of the client, the number of accessible storage resources of the client, and a validity period of authorization of the client.

3. The resource control method according to claim 1 or 2, wherein before the sending, by a client, an authorization request message to a content provider, the method further comprises:
sending, by the client, an access token request message to the storage server; and
receiving, by the client, the unauthorized access token sent by the storage server according to the access token request message.

4. The resource control method according to any one of claims 1 to 3, wherein the receiving content sent by the storage server according to the authorized access token comprises:
receiving, by the client, the content requested by the client and sent by the storage server by using resources allocated according to the authorized access token.

5. A resource control method, comprising:
receiving, by a storage server, a content request message sent by a client, wherein the content request message carries an identifier of content requested by the client and an authorized access token;
allocating, by the storage server, a resource to the client according to the authorized access token; and
sending, by the storage server, the content requested by the client to the client by using the resource allocated to the client.

6. The method according to claim 5, wherein the method further comprises:
receiving, by the storage server, an access token request message sent by the client, wherein the access token request message carries a user identifier; and
sending, by the storage server, an access token response message to the client, according to the access token request message, so that the client obtains the authorized access token from a content provider corresponding to the storage server, wherein the access token response message carries authorization information, and the authorization information comprises an unauthorized access token.

7. A resource control apparatus, comprising:
a first sender, configured to send an authorization request message to a content provider, wherein the authorization request message carries a user identifier and an unauthorized access token;
a first receiver, configured to receive an authorization response message sent by the content provider according to the authorization request message, wherein the authorization response message carries authorization information, and the authorization information comprises an authorized access token;
a second sender, configured to send a content request message to a storage server corresponding to the content provider, wherein the content request message carries an identifier of content requested by the client and the authorized access token; and
a second receiver, configured to receive the content sent by the storage server according to the authorized access token.

8. The resource control apparatus according to claim 7, wherein the authorized access token comprises at least one of the following: a priority level of the client, available bandwidth and the number of resource connections of the client, the number of accessible storage resources of the client, and a validity period of authorization of the client

9. The resource control apparatus according to claim 7 or 8, further comprising:
a third sender, configured to send an access token request message to the storage server; and
a third receiver, configured to receive the unauthorized access token sent by the storage server according to the access token request message.

10. The resource control apparatus according to any one of claims 7 to 9, wherein:
the second receiver is further configured to receive the content requested by the client and sent by the storage server by using a resource allocated according to the authorized access token.

11. A resource control apparatus, comprising:
a first receiver, configured to receive a content request message sent by a client, wherein the content request message carries an identifier of content requested by the client and an authorized access token;
an allocating unit, configured to allocate a resource to the client according to the authorized access token; and
a first sender, configured to send to the client the content requested by the client by using the resource allocated by the allocating unit to the client.

12. The resource control apparatus according to claim 11, further comprising:
a second receiver, configured to receive an access token request message sent by the client, wherein the access token request message carries a user identifier; and
a second sender, configured to send an access token response message to the client according to the access token request message, so that the client obtains an authorized access token from a content provider corresponding to the storage server, wherein the access token response message carries authorization information, and the authorization information comprises an unauthorized access token.
